# FASCICULE DE BREVET EUROPEEN

(11) **EP 1 967 695 B1**
(45) Date de publication et mention de la délivrance du brevet: **21.09.2016**
(21) Numéro de dépôt: 08151746.8
(22) Date de dépôt: 21.02.2008
(51) Int. Cl.: F01D 5/22, F01D 5/30, F01D 11/00, F01D 21/04, F16B 5/02, F16F 7/12

(54) **Soufflante de turbomachine et douille pour soufflante de turbomachine**
Gebläse eines Turbotriebwerks und Hülse für ein Gebläse
Gas turbine fan and sleeve for a gas turbine fan

(30) Priorité: 28.02.2007 FR 0701421
(43) Date de publication de la demande: 10.09.2008
(73) Titulaire: SNECMA, 75015 Paris (FR)
(72) Inventeur: BELMONTE, Olivier, 77176, SAVIGNY-LE-TEMPLE (FR); GOGA, Jean-Luc, Christian, Yvon, 77430, CHAMPAGNE SUR SEINE (FR)
(74) Mandataire: Ramey, Daniel

(56) Documents cités:
- EP-A- 1 355 044
- FR-A- 2 878 932
- GB-A- 949 975
- JP-A- 2002 120 735
- US-A- 5 277 548
- US-A1- 2004 033 105
- US-B1- 6 634 863

## Description

La présente invention concerne une soufflante d'une turbomachine, telle qu'un turboréacteur d'avion.

De façon connue, la soufflante prévue à l'extrémité amont d'un turboréacteur comprend des aubes portées par un disque de rotor, avec des plates-formes disposées entre les aubes et fixées par des brides radiales à des brides du disque au moyen de tiges filetées insérées à travers des douilles montées dans des orifices des brides de la plate-forme et à travers des brides du disque, ces plates-formes permettant de guider le flux d'air entrant dans la turbomachine et d'éviter les circulations d'air parasites vers le disque.

Lors du fonctionnement de la turbomachine, la rupture de la liaison d'une aube avec le disque peut entraîner la destruction de la plate-forme attenante. En effet, l'aube vient alors en appui sur les bords latéraux de la plate-forme et / ou sur les brides de la plate-forme, ce qui génère une contrainte importante sur les fixations des brides de la plate-forme aux brides du disque et peut entraîner une rupture de ces fixations et l'éjection de la plate-forme dans la veine d'écoulement d'air et conduire à la destruction de parties de la turbomachine situées en aval.

Afin de remédier à ce problème, il a été proposé de former des zones déformables sur les bords latéraux de la plate-forme. Une autre solution, éventuellement utilisée en combinaison avec la précédente, est de former des zones de butée sur les brides du disque pour éviter le contact entre la plate-forme et l'aube. Ainsi, la contrainte n'est plus supportée par la plate-forme mais par la bride du disque. Cependant, ces solutions ne sont pas satisfaisantes car elles ne confèrent pas de souplesse à la liaison entre les brides de la plate-forme et les brides du disque et ne permettent pas d'absorber suffisamment l'énergie due au choc entre l'aube et la plate-forme.

Le document US-B1-6634863, décrit un disque de soufflante comportant à sa périphérie une pluralité de rainures dans lesquelles sont engagées axialement les pieds d'aube. Des plates-formes sont intercalées entre les aubes et comprennent trois brides radiales fixées sur des brides correspondantes du disque au moyen de tiges filetées insérées dans des orifices des brides de la plate-forme et des brides du disque. Des douilles sont insérées dans les orifices des brides du milieu et de l'arrière de la plate forme pour que les contraintes en fonctionnement soient principalement appliquées aux douilles et non aux brides de la plate forme qui sont en aluminium.

Le document EP-A-1355044, décrit un dispositif de rétention axiale des aubes d'un disque de soufflante portant une pluralité d'aubes. Un anneau est fixé sur la face amont du disque et appliqué contre les extrémités amont des pieds d'aubes. En cas de perte d'aube, l'aube désolidarisée vient au contact de l'aube voisine, ce qui se traduit par un mouvement vers l'amont de l'aube voisine. L'extrémité amont du pied d'aube vient en contact avec l'anneau et l'énergie du choc est ainsi transmise à l'anneau puis au disque.

Le document GB-A-949975, décrit un palier de butée comprenant une bague de palier montée à l'intérieur d'un logement de palier et reliée à ce logement de palier par l'intermédiaire de liaisons élastiques radiales par rapport à l'axe de la bague de palier. Le logement de palier est relié à une. base de palier par des liaisons élastiques perpendiculaires à aux premières liaisons élastiques et à l'axe de la bague de palier. Cet agencement permet que la bague de palier s'adapte à une modification de la position angulaire de l'arbre de rotation monté à l'intérieur de la bague de palier.

L'invention a notamment pour but d'apporter une solution simple, économique et efficace à ces différents problèmes.

Elle propose à cet effet une soufflante de turbomachine selon la revendication 1, comprenant des aubes portées par un disque de rotor et des plates formes inter-aubes comportant des brides radiales fixées sur des brides correspondantes du disque de rotor au moyen de tiges filetées insérées dans des douilles de positionnement montées dans des orifices des brides des plates-formes, caractérisée en ce que chaque douille comprend au moins une partie déformable interposée transversalement entre la tige filetée insérée dans la douille et un bord de l'orifice dans lequel est montée la douille, cette partie déformable étant destinée à autoriser un basculement de la plate forme en cas de choc d'une aube sur la plate-forme et à absorber une partie de l'énergie du choc.

En cas de perte d'aube, la zone déformable autorise une déformation locale plastique de la douille au niveau des zones de fixation des tiges filetées ce qui évite ainsi la destruction des fixations entre les brides de la plate-forme et les brides du disque et l'éjection de la plate-forme dans la veine d'écoulement d'air. La plate-forme ne subit aucune déformation et peut ainsi être maintenue en position pendant le temps nécessaire à l'arrêt du moteur, ce qui évite ainsi d'importants endommagements de la turbomachine. Les opérations de maintenance sont ainsi facilitées et seule la douille déformée par le choc doit être remplacée.

Selon une autre caractéristique de l'invention, la partie déformable de la douille est juxtaposée à une partie rigide de la douille opposée à la partie déformable par rapport à la tige filetée.

L'utilisation d'une douille en deux parties permet de ne remplacer que la partie de la douille ayant subi une déformation suite à l'impact d'une aube sur la plate-forme.

Selon une autre caractéristique de l'invention, la partie déformable comprend deux demi-cylindres parallèles reliés par des voiles déformables et dont les concavités sont orientées dans une même direction, un demi-cylindre étant appliqué sur la tige filetée et l'autre sur une surface cylindrique interne de l'orifice de la bride de la plate-forme.

L'appui radial d'un demi-cylindre sur une surface cylindrique interne de l'orifice de la bride de la plate-forme permet de transmettre au mieux les contraintes engendrées par la perte d'une aube aux voiles lesquelles vont se déformer et ainsi absorber une partie de l'énergie du choc.

Dans un mode de réalisation préféré de l'invention, les extrémités des deux demi-cylindres de la partie déformable sont alignées avec des extrémités cylindriques de la partie rigide de la douille et sont sensiblement en appui sur ces mêmes extrémités.

Avantageusement, les extrémités alignées d'un des demi-cylindres de la partie déformable et de la partie rigide comportent des indentations complémentaires engagées les unes dans les autres et immobilisant les deux parties de la douille l'une par rapport à l'autre en translation dans l'orifice de la bride de la plate-forme.

Selon une autre caractéristique de l'invention, les demi-cylindres de la partie déformable sont reliées par deux voiles sensiblement parallèles entre eux et raccordés à des parties intermédiaires des demi-cylindres.

En cas de perte d'aube, les deux voiles de matière absorbent l'énergie du choc de l'aube sur la plate-forme en se déformant plastiquement. La forme et les dimensions de ces voiles peuvent varier assez largement dans la pratique, selon les types des turbomachines auxquelles l'invention est appliquée.

Dans une variante de réalisation, la bride de la plate-forme est fixée à la bride du disque au moyen de deux tiges filetées parallèles passant dans deux orifices voisins de la bride du disque et dans un orifice commun de la bride de la plate-forme dans lequel est montée une douille précitée comprenant une partie rigide et une partie déformable, la partie rigide étant formée avec un orifice de passage d'une tige filetée et avec un demi-orifice de passage de l'autre tige filetée, la partie déformable comportant l'autre demi-orifice de passage de l'autre tige filetée.

Cette variante évite que la plate-forme puisse tourner autour de l'axe d'une tige filetée. L'intégration d'un second orifice au niveau de la partie rigide permet de s'opposer au couple de basculement de la plate-forme et ainsi de la maintenir en position.

Selon les différentes configurations possibles, en cas de perte d'aube, il peut être nécessaire que la douille effectue un mouvement de déplacement rectiligne ou incurvée pour absorber au mieux l'énergie libérée par le choc de l'aube sur la plate-forme.

La douille peut être fixée par sertissage dans l'orifice de la bride de la plate-forme.

L'invention concerne également une turbomachine, telle qu'un turboréacteur d'avion, caractérisée en ce qu'elle comprend une soufflante du type décrit ci-dessus.

L'invention concerne encore une douille selon la revendication 12 destinée à être insérée dans un orifice d'une bride de plate-forme inter-aubes et comprenant une partie rigide et une partie déformable, la partie déformable comportant deux demi-cylindres parallèles reliés par des voiles de matière et dont les concavités sont orientées dans une même direction, les deux demi-cylindres étant alignés avec et sensiblement en appui sur des extrémités cylindriques de la partie rigide. Les extrémités alignées d'un des demi-cylindres et de la partie rigide comportent avantageusement des indentations complémentaires engagées les unes dans les autres.

Dans une variante, la partie rigide de la douille comprend un orifice et un demi-orifice parallèles, le demi-orifice coopérant avec un demi-orifice de la partie déformable.

D'autres avantages et caractéristiques de l'invention apparaîtront à la lecture de la description suivante faite à titre d'exemple non limitatif et en référence aux dessins annexés dans lesquels :
- La figure 1 est une vue schématique partielle en perspective d'une soufflante selon l'invention ;
- La figure 2 est une vue en perspective d'une douille déformable selon l'invention ;

- La figure 3 est une vue schématique en perspective représentant cette douille insérée dans un orifice d'une bride d'une plate-forme ;
- La figure 4 est une vue schématique en perspective d'un second mode de réalisation d'une douille selon l'invention, insérée dans un orifice d'une bride d'une plate-forme.

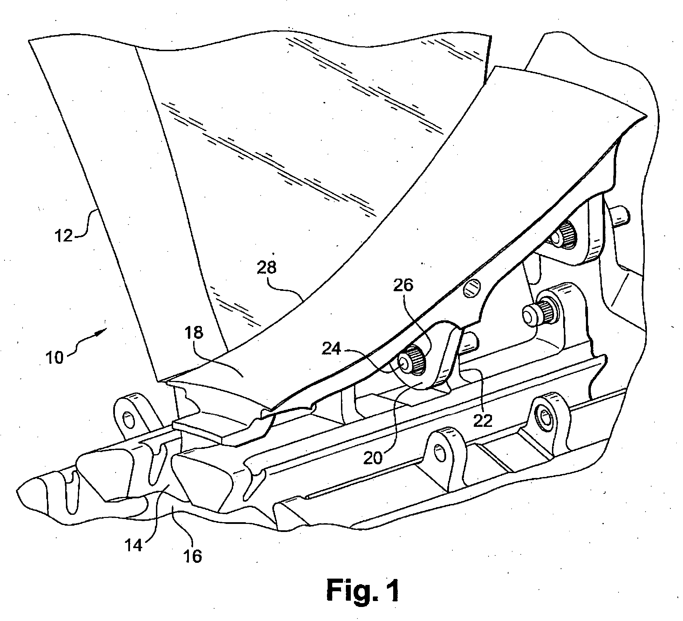

On se réfère tout d'abord à la figure 1 qui représente une partie d'une soufflante 10 d'une turbomachine. Une aube 12 de soufflante 10 formée d'une pale raccordée à son extrémité radialement interne à un pied d'aube est engagée dans une alvéole 14 périphérique d'un disque 16 de rotor. Une plate-forme inter-aubes 18 comprend des brides 20 s'étendant radialement vers l'intérieur et fixées à des brides 22 du disque s'étendant radialement vers l'extérieur. Les brides 20 de la plate-forme 18 sont décalées axialement et radialement. La fixation de chaque bride 20 de la plate-forme est assurée par une tige filetée 24 s'étendant selon l'axe de la turbomachine à travers une douille 26 insérée dans un orifice de la bride de la plate-forme et à travers un orifice correspondant de la bride 22 du disque 12. La tige filetée reçoit un écrou de serrage à une de ses extrémités.

Dans une turbomachine, les plates-formes 18 doivent être suffisamment proches des aubes 12 pour éviter toute circulation d'air parasite vers le disque 16. En cas de perte d'aube, l'aube 12 subit un mouvement de rotation selon l'axe de l'alvéole 14 et vient en contact avec un bord latéral 28 et/ou avec les brides 20 de la plate-forme 18. Le choc de l'aube 12 sur la plate-forme 18 peut rompre les fixations de la plate-forme 18 sur le disque 16 et éjecter la plate-forme 18.

L'invention propose, pour absorber une partie de l'énergie du choc en cas de perte d'aube, d'interposer transversalement un élément déformable dans les moyens de fixation de la plate-forme, ce qui permet de rendre plus souple la liaison entre la bride 20 de la plate-forme 18 et la bride 22 du disque et d'autoriser un basculement limité de la plate-forme 18 en cas de perte d'aube, tout en assurant une bonne tenue mécanique en fonctionnement normal de la turbomachine.

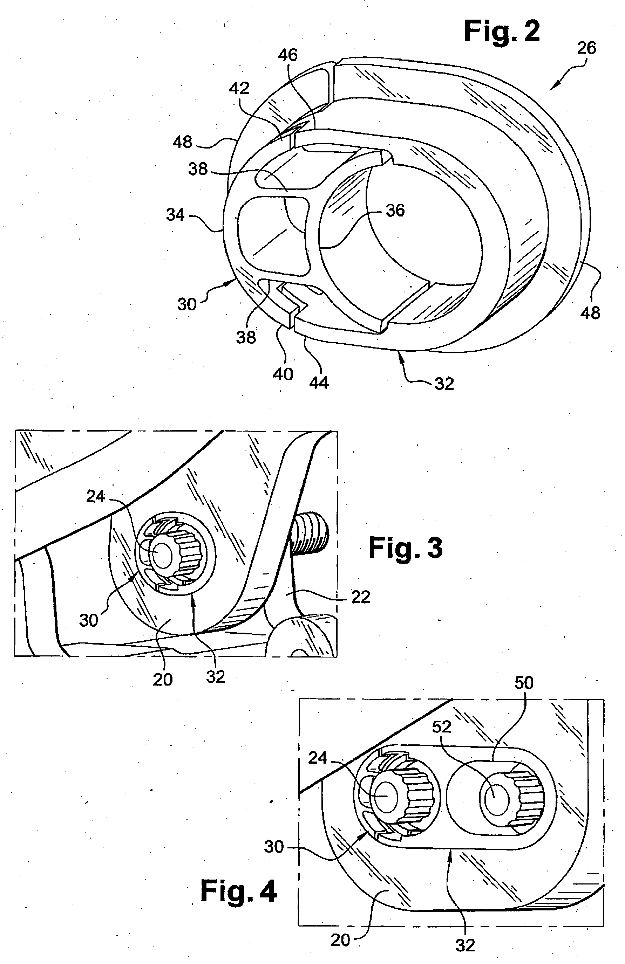

On a représenté aux figures 2 et 3 une douille 26 selon l'invention, destinée à être insérée dans un orifice de la bride 20 de la plate-forme 18. La douille 26 est composée d'une partie déformable 30 et d'une partie rigide 32 juxtaposées. La partie déformable 30 comprend deux demi-cylindres 34, 36 parallèles et dont les concavités sont orientées selon la même direction vers la partie rigide 32. La surface externe du demi-cylindre externe 34 est en contact avec une surface cylindrique interne de l'orifice de la bride dé la plate-forme, la surface interne du demi-cylindre 36 étant appliquée sur la tige filetée. Les demi-cylindres 34, 36 sont reliés dans leurs parties intermédiaires par deux voiles 38 déformables parallèles. Ces voiles 38 sont sensiblement parallèles à un plan tangent à la circonférence du disque 16. Les extrémités des deux demi-cylindres 34, 36 de la partie déformable 30 sont alignées avec les extrémités de la partie rigide 32. Les extrémités 40, 42 du demi-cylindre externe 34 de la partie déformable 30 de la douille 26 comportent des indentations dans lesquelles sont engagées des indentations complémentaires formées au niveau des extrémités 44, 46 de la partie rigide. Ce mode de liaison des parties déformable 30 et fixe 32 permet d'éviter tout mouvement de translation de l'une des parties déformable 30 ou rigide 32 par rapport à l'autre. On peut également réaliser une jupe de sertissage 48 de la douille 26 dans l'orifice de la bride 20 de la plate-forme 18 pour assurer un maintien axial de la douille 26 dans l'orifice de la bride 20 de la plate-forme 10.

En cas de perte d'aube, l'aube désolidarisée vient percuter les bords 28 et la bride 20 de la plate-forme 18. L'énergie du choc est transmise par la bride de la plate-forme à la partie déformable de la douille, qui vient s'écraser plus ou moins sur la tige filetée 24, les voiles 38 se déformant plastiquement et permettant ainsi à la plate-forme 18 de se déplacer par rapport à la tige filetée 24. Ce déplacement peut s'effectuer selon une trajectoire rectiligne ou incurvée en fonction du mouvement souhaité de la plate-forme 18 suite à l'impact de l'aube 12 sur celle-ci. La forme et les dimensions des voiles 38 sont choisies en fonction du seuil de déformation souhaité pour la partie déformable 30.

Les deux parties de la douille peuvent être réalisées dans des matériaux identiques ou bien des matériaux différents.

Selon une variante possible de l'invention non représentée, la douille 26 comprend deux parties déformables symétriques par rapport à la tige filetée.

Selon une variante de l'invention représentée en figure 4, la partie rigide de la douille 26 comprend un deuxième orifice 50 parallèle au premier et dans lequel est insérée une deuxième tige filetée 52 qui passe dans un deuxième orifice de la bride du disque. Le second orifice permet de s'opposer à une rotation de la plate-forme 18 autour d'une tige filetée et ainsi de maintenir la plate-forme parfaitement en place.

L'orifice 50 de la douille recevant la seconde tige filetée 52 est allongé dans une direction transverse. Ainsi en cas de perte d'aube, le choc induit une déformation de la partie déformable 30 de la douille 26 et un déplacement de la partie rigide 32 par rapport à cette seconde tige filetée 52, sans buter sur cette tige filetée.

Ce second orifice peut avoir des formes variées en fonction du déplacement souhaité de la plate-forme 18. En particulier, il peut avoir une forme incurvée.

La plate-forme 18 peut comprendre des douilles 26 avec un seul orifice et/ou avec deux orifices selon le mode de fixation adéquat de chaque bride 20 de la plate-forme 18.

## Revendications

1. Soufflante (10) de turbomachine, comprenant des aubes (12) portées par un disque (16) de rotor et des plates-formes (18) inter-aubes comportant des brides (20) radiales fixées sur des brides (22) correspondantes du disque (16) de rotor au moyen de tiges (24) filetées insérées dans des douilles (26) de positionnement montées dans des orifices des brides (20) des plates-formes (18), **caractérisée en ce que** chaque douille (26) comprend au moins une partie déformable (30) interposée transversalement entre la tige (24) filetée insérée dans la douille (26) et un bord de l'orifice dans lequel est montée la douille (26), cette partie déformable (30) étant destinée à autoriser un basculement de la plate-forme (18) en cas de choc d'une aube (12) sur la plate-forme (18) et à absorber une partie de l'énergie du choc.

2. Soufflante selon la revendication 1, **caractérisée en ce que** la partie déformable (30) de la douille (26) est juxtaposée à une partie rigide (32) de la douille (26) opposée à la partie déformable (30) par rapport à la tige (24) filetée.

3. Soufflante selon la revendication 2, **caractérisée en ce que** la partie déformable (30) comprend deux demi-cylindres (34, 36) parallèles reliés par des voiles (38) déformables et dont les concavités sont orientées dans une même direction, un demi-cylindre (34) étant appliqué sur la tige (24) filetée et l'autre sur une surface cylindrique interne de l'orifice de la bride (20) de la plate-forme (18).

4. Soufflante selon la revendication 3, **caractérisée en ce que** les extrémités (40, 42) des deux demi-cylindres (34, 36) sont alignées avec et sensiblement en appui sur des extrémités cylindriques (44, 46) de la partie rigide (32) de la douille.

5. Soufflante selon la revendication 4, **caractérisée en ce que** les extrémités alignées d'un des demi-cylindres (34, 36) et de la partie rigide (32) comportent des indentations complémentaires engagées les unes dans les autres et immobilisant les deux parties de la douille (26) l'une par rapport à l'autre en translation dans l'orifice de la bride (20) de la plate-forme (18).

6. Soufflante selon l'une des revendications 3 à 5, **caractérisée en ce que** les demi-cylindres (34, 36) de la partie déformable (30) sont reliées par deux voiles (38) sensiblement parallèles entre eux et raccordés à des parties intermédiaires des demi-cylindres (34, 36).

7. Soufflante selon l'une des revendications 2 à 6, **caractérisée en ce que** la bride (20) de la plate-forme (18) est fixée à la bride (22) du disque (16) au moyen de deux tiges filetées parallèles passant dans deux orifices voisins de la bride (22) du disque (16) et dans un orifice commun de la bride (20) de la plate-forme (18) dans lequel est montée une douille (26) précitée comprenant une partie rigide et une partie déformable, la partie rigide (32) étant formée avec un orifice de passage (50) d'une tige filetée (52) et avec un demi-orifice de passage de l'autre tige filetée (24), la partie déformable (30) comportant l'autre demi-orifice de passage de l'autre tige filetée (24).

8. Soufflante selon l'une des revendications 1 à 7, **caractérisée en ce que** le déplacement de la douille (26) en cas de choc est sensiblement rectiligne.

9. Soufflante selon l'une des revendications 1 à 7, **caractérisée en ce que** le déplacement de la douille (26) en cas de choc s'effectue selon une trajectoire incurvée.

10. Soufflante selon l'une des revendications précédentes, caractérisée en ce la douille (26) est fixée par sertissage (48) dans l'orifice de la bride de la plate-forme.

11. Turbomachine, telle qu'un turboréacteur ou un turbopropulseur d'avion, **caractérisée en ce qu'**elle comprend une soufflante (10) selon l'une des revendications précédentes.

12. Douille (26) de fixation d'une bride (20) de plate-forme inter-aubes pour une soufflante de turbomachine selon l'une des revendications 1 à 10, **caractérisée en ce qu'**elle comprend une partie rigide (32) et une partie déformable (30), la partie déformable (30) comportant deux demi-cylindres (34, 36) parallèles reliés par des voiles (38) déformables et dont les concavités sont orientées dans une même direction, les deux demi-cylindres (34, 36) étant alignés avec et sensiblement en appui sur des extrémités cylindriques (44, 46) de la partie rigide (32) de la douille (26).

13. Douille selon la revendication 12, **caractérisée en ce que** les extrémités alignées d'un des demi-cylindres et de la partie rigide (32) comportent des indentations complémentaires engagées les unes dans les autres.

14. Douille selon la revendication 12 ou 13, **caractérisée en ce que** la partie rigide (32) comprend un orifice et un demi-orifice parallèles, le demi-orifice coopérant avec un demi-orifice de la partie déformable (30).

15. Douille selon l'une des revendications 12 à 14, **caractérisée en ce que** la partie déformable (30) et la partie rigide (32) de la douille sont juxtaposables.

## Patentansprüche

1. Gebläse (10) eines Turbinentriebwerks mit Schaufeln (12), die getragen werden von einer Rotorscheibe (16) und Zwischenschaufelplattformen (18) mit radialen Flanschen (20), die auf den entsprechenden Flanschen (22) der Rotorscheibe (16) mittels Gewindestiften (24), welche in die in die Öffnungen der Flansche (20) der Plattformen (18) montierte Positionierhülsen (26) eingeführt werden, befestigt sind, **dadurch gekennzeichnet, dass** jede Hülse (256) mindestens einen verformbaren Teil (30) umfasst, der quer zwischen dem in die Hülse (26) eingeführten Gewindestift (24) und dem Rand der Öffnung, in welche die Hülse (26) montiert ist, angeordnet ist, wobei dieser verformbare Teil (30) dazu bestimmt ist, das Kippen der Plattform (18) im Falle des Aufpralls einer Schaufel (12) auf der Plattform (18) zu ermöglichen und einen Teil der Aufprallenergie zu absorbieren.

2. Gebläse nach Anspruch 1, **dadurch gekennzeichnet, dass** der verformbare Teil (30) der Hülse (26) neben einem steifen Teil (32) der Hülse (26), der dem verformbaren Teil (30) bezüglich dem Gewindestift (24) gegenüberliegt, angeordnet ist.

3. Gebläse nach Anspruch 2, **dadurch gekennzeichnet, dass** der verformbare Teil (30) zwei parallele Halbzylinder (34, 36) umfasst, die durch verformbare Schalen (38) miteinander verbunden und deren Konkavitäten in ein und dieselbe Richtung ausgerichtet sind, wobei ein Halbzylinder (34) auf dem Gewindestift (24) angelegt ist und der andere auf einer zylindrischen Innenfläche der Öffnung des Flansches (20) der Plattform (18).

4. Gebläse nach Anspruch 3, **dadurch gekennzeichnet, dass** die Enden (40, 42) der beiden Halbzylinder (34, 36) auf die zylindrischen Enden (44) des steifen Teils (32) der Hülse ausgerichtet sind und im Wesentlichen darauf aufliegen.

5. Gebläse nach Anspruch 4, **dadurch gekennzeichnet, dass** die achsrecht ausgerichteten Enden einer der Halbzylinder (34, 36) und des steifen Teils (32) komplementäre Eintiefungen aufweisen, die ineinander greifen und die beiden Teile der Hülse (26) in der translatorischen Bewegung in der Öffnung des Flansches (20) der Plattform (18) zum Stillstand bringen.

6. Gebläse nach einem der Ansprüche 3 bis 5, **dadurch gekennzeichnet, dass** die Halbzylinder (34, 36) des verformbaren Teils (30) durch zwei im Wesentlichen parallel zueinander stehende, mit den Zwischenteilen der Halbzylinder (345, 36) verbundenen Schalen (36) miteinander verbunden sind.

7. Gebläse nach einem der Ansprüche 2 bis 6, **dadurch gekennzeichnet, dass** der Flansch (20) der Plattform (18) am Flansch (22) der Scheibe (16) mittels zweier paralleler Gewindestifte befestigt ist, die durch zwei neben dem Flansch (22) der Scheibe (16) befindliche Löcher und durch eine gemeinsame Öffnung des Flansches (22) der Plattform, in welche die vorgenannte Hülse (26) mit einem steifen und einem verformbaren Teil montiert ist, durchgeführt wird, wobei der steife Teil (32) mit einer Durchgangsöffnung (50) für eine Gewindestift (52) und einer halben Durchgangsöffnung für den anderen Gewindestift (24) versehen ist, und der verformbare Teil (30) die andere halbe Durchgangsöffnung des anderen Gewindestifts (24) umfasst.

8. Gebläse nach einem der Ansprüche 1 bis 7, **dadurch gekennzeichnet, dass** sich die Hülse (26) bei einem Aufprall im Wesentlichen geradlinig verschiebt.

9. Gebläse nach einem der Ansprüche 1 bis 7, **dadurch gekennzeichnet, dass** die Verschiebung der Hülse (26) im Falle eines Aufpralls auf einer gekrümmten Bahn erfolgt.

10. Gebläse nach einem der vorhergehenden Ansprüche, **dadurch gekennzeichnet, dass** diese Hülse (26) durch Aufpressen (48) in der Öffnung des Flansches der Plattform befestigt wird.

11. Turbinentriebwerk wie zum Beispiel ein Turbostrahltriebwerk oder ein Turbopropeller eines Flugzeugs, **dadurch gekennzeichnet, dass** es eine Gebläse (10) nach einem der vorhergehenden Ansprüche umfasst.

12. Befestigungshülse (12) für den Flansch (20) einer Zwischenschaufelplattform für eine Gebläse eines Turbinentriebwerks gemäß einem der Ansprüche 1 bis 10, **dadurch gekennzeichnet, dass** sie einen steifen Teil (32) und einen verformbaren Teil (30) umfasst, wobei der verformbare Teil (30) zwei parallele Halbzylinder (34, 36) umfasst, die über verformbare Schalen (38) miteinander verbunden sind und deren Konkavitäten in ein und dieselbe Richtung ausgerichtet sind, wobei die beiden Halbzylinder (34, 36) auf die zylindrischen Enden (44, 46) des steifen Teils (32) der Hülse (26) und im Wesentlichen darauf aufliegend ausgerichtet sind.

13. Hülse nach Anspruch 12, **dadurch gekennzeichnet, dass** die ausgerichteten Enden eines der Halbzylinder und des steifen Teils (32) komplementäre Vertiefungen umfassen, die ineinander eingreifen.

14. Hülse nach Anspruch 12 oder 13, **dadurch gekennzeichnet, dass** der steife Teil (32) eine Öffnung und eine parallele Halböffnung umfasst, wobei die Halböffnung mit einer Halböffnung des verformbaren Teils (30) zusammenwirkt.

15. Hülse nach einem der Ansprüche 12 bis 14, **dadurch gekennzeichnet, dass** der verformbare Teil (30) und der steife Teil (32) der Hülse nebeneinander angeordnet sind.

## Claims

1. A turbomachine fan (10) comprising blades (12) carried by a rotor disk (16) and inter-blade platforms (18) having radial flanges (20) fastened to corresponding flanges (22) of the rotor disk (16) by means of threaded rods (24) inserted into positioning bushes (26) mounted in orifices in the flanges (20) of the platforms (18), **characterized in that** each bush (26) comprises at least one deformable part (30) interposed transversely between the threaded rod (24) inserted into the bush (26) and an edge of the orifice in which the bush (26) is mounted, this deformable part (30) being intended to allow the platform (18) to pivot in the event of an impact of a blade (12) against the platform (18) and to absorb some of the energy of the impact.

2. The fan as claimed in claim 1, **characterized in that** the deformable part (30) of the bush (26) is juxtaposed with a rigid part (32) of the bush (26) that is opposed to the deformable part (30) with respect to the threaded rod (24).

3. The fan as claimed in claim 2, **characterized in that** the deformable part (30) comprises two parallel half-cylinders (34, 36) which are connected by deformable webs (38) and whose concavities are oriented in the same direction, one half-cylinder (34) being applied to the threaded rod (24) and the other to an internal cylindrical surface of the orifice in the flange (20) of the platform (18).

4. The fan as claimed in claim 3, **characterized in that** the ends (40, 42) of the two half-cylinders (34, 36) are aligned with and substantially bear on cylindrical ends (44, 46) of the rigid part (32) of the bush.

5. The fan as claimed in claim 4, **characterized in that** the aligned ends of one of the half-cylinders (34, 36) and of the rigid part (32) have interengaged complementary indentations which immobilize the two parts of the bush (26) with respect to one another against translational movement in the orifice in the flange (20) of the platform (18).

6. The fan as claimed in claims 3 to 5, **characterized in that** the half-cylinders (34, 36) of the deformable part (30) are connected by two substantially parallel webs (38) joined to intermediate parts of the half-cylinders (34, 36).

7. The fan as claimed in claims 2 to 6, **characterized in that** the flange (20) of the platform (18) is fastened to the flange (22) of the disk (16) by means of two parallel threaded rods passing into two adjacent orifices in the flange (22) of the disk (16) and into a common orifice in the flange (20) of the platform (18) in which there is mounted an aforementioned bush (26) comprising a rigid part and a deformable part, the rigid part (32) being formed with an orifice for the passage (50) of one threaded rod (52) and with a half-orifice for the passage of the other threaded rod (24), the deformable part (30) having the other half-orifice for the passage of the other threaded rod (24).

8. The fan as claimed in claims 1 to 7, **characterized in that** the displacement of the bush (26) in the event of an impact is substantially rectilinear.

9. The fan as claimed in claims 1 to 7 , **characterized in that** the displacement of the bush (26) in the event of an impact occurs along a curved path.

10. The fan as claimed in one of the preceding claims, **characterized in that** the bush (26) is fastened by crimping (48) in the orifice of the flange of the platform.

11. A turbomachine, such as an aircraft turbojet or a turboprop, **characterized in that** it comprises a fan (10) as claimed in one of the preceding claims.

12. A bush (26) for fastening a flange (20) of an inter-blade platform for a turbomachine fan as claimed in one of claims 1 to 10, **characterized in that** it comprises a rigid part (32) and a deformable part (30), the deformable part (30) having two parallel half-cylinders (34, 36) which are connected by deformable webs (38) and whose concavities are oriented in the same direction, the two half-cylinders (34, 36) being aligned with and substantially bearing on cylindrical ends (44, 46) of the rigid part (32) of the bush (26).

13. The bush as claimed in claim 12, **characterized in that** the aligned ends of one of the half-cylinders and of the rigid part (32) have interengaged complementary indentations.

14. The bush as claimed in claim 12 or 13, **characterized in that** the rigid part (32) comprises an orifice and a half-orifice which are parallel, the half-orifice cooperating with a half-orifice of the deformable part (30).

15. The bush as claimed in claims 12 to 14, **characterized in that** the deformable part (30) and the rigid part (32) of the bush are juxtaposable.
